(19) Europäisches Patentamt
European Patent Office
Office européen des brevets

(11) Veröffentlichungsnummer : **0 255 608 B1**

(12) # EUROPÄISCHE PATENTSCHRIFT

(45) Veröffentlichungstag der Patentschrift : **16.10.91 Patentblatt 91/42**

(51) Int. Cl.$^5$ : **C09D 175/02, C09D 175/06**

(21) Anmeldenummer : **87109514.7**

(22) Anmeldetag : **02.07.87**

(54) **Wärmehärtbare Beschichtungsmasse und deren Verwendung.**

(30) Priorität : **05.07.86 DE 3622714**

(43) Veröffentlichungstag der Anmeldung : **10.02.88 Patentblatt 88/06**

(45) Bekanntmachung des Hinweises auf die Patenterteilung : **16.10.91 Patentblatt 91/42**

(84) Benannte Vertragsstaaten : **AT BE CH DE ES FR GB IT LI NL SE**

(56) Entgegenhaltungen :
**EP-A- 0 140 357**
**DE-A- 2 418 951**

(73) Patentinhaber : **Herberts Gesellschaft mit beschränkter Haftung
Christbusch 25
W-5600 Wuppertal 2 (DE)**

(72) Erfinder : **Klostermann, Peter, Dr. Dipl.-Chem.
Eisenbahnstrasse 16
W-4322 Sprockhövel 1 (DE)**
Erfinder : **Stolzenbach, Heinrich, Dr. Dipl.-Chem.
Kottsiepen 73
W-5600 Wuppertal 21 (DE)**
Erfinder : **Günther, Petra
Herzkamper-Strasse 116
W-5600 Wuppertal 2 (DE)**

(74) Vertreter : **Türk, Gille, Hrabal
Brucknerstrasse 20
W-4000 Düsseldorf 13 (DE)**

EP 0 255 608 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Warmehärtbare Beschichtungsmassen mit verschiedenen Vernetzungsmitteln sind bekannt. Als Vernetzungsmittel werden nach dem Stand der Technik eingesetzt Phenolharze, Aminharze oder Polyisocyanate. Obwohl derartige Beschichtungsmassen in großem Umfang technisch eingesetzt werden, besitzen sie schwerwiegende Nachteile. Phenolharze sind zwar billig und ergeben Beschichtungen mit hoher Chemikalienbeständigkeit, sind aber aus arbeitshygienischen Gründen problematisch wegen der unerwünschten Formaldehyd-Abspaltung. Die Beschichtungen sind wenig witterungsbeständig und dann, wenn sie durch geeignete Auswahl der komponenten eine hohe Härte besitzen, wenig elastisch.

Im wesentlichen das gleiche gilt für Beschichtungsmassen enthaltend Aminharze als Vernetzungskomponente, wobei deren Vorteil jedoch nicht in der Chemikalienbeständigkeit, sondern in der Witterungsbeständigkeit liegt. Die genannten Aminharze sind Prekondensate aus Melamin oder Harnstoff mit Formaldehyd und Alkoholen.

Die oben erwähnten Phenolharze und Aminharze enthalten im allgemeinen freien Formaldehyd, welcher bei üblicher Verarbeitung der diese enthaltende Beschichtungsmittel zu arbeitshygienischen Problemen führen kann,(Einatmen von Spritznebeln, Hautkontakt usw.). Daneben enthalten diese Harze auch erhebliche Anteile chemisch gebundenen Formaldehyds, welcher bei erhönter Temperatur, z.B. beim Einbrennvorgang, leicht abspaltbar Ist und in die Luft gelangt, Die Toxizität des Formaldehyds bei der Verwendung solcher Beschichtungsmassen ist in vielen Veröffentlichungen beschrieben, und es besteht ein außerordentliches Bedürfnis, Beschichtungmassen zu finden, die diese Nachteile nicht aufweisen.

In großem Umfang eingesetzt werden auch Beschichtungsmassen aus hydroxylgruppenhaltigen Verbindungen und Polyisocyanaten als Vernetzern. Diese besitzen hohe Witterungsbeständigkeit und gute Elastizität bei hoher Härte. Ihr Nachteil liegt darin, daß die Polyisocyanate relativ schwer zugänglich und deshalb teuer sind. Die Polyisocyanat-Komponente verursacht ebenfalls arbeitshygienische Probleme, da eine Gefahr der Sensibilisierung der Personen besteht, insbesondere durch Inhalation von Isocyanaten in Form von Aerosolen (z.B. bei der Spritzapplikation). Auch dies ist auf dem Lackgebiet bekannt. Wenn blockierte Polyisocyanate eingesetzt werden, treten beim Einbrennvorgang hohe Abspalverluste ein.

Eine andere Gruppe von großtechnisch eingesetzten Beschichtungsmassen sind Epoxidharze, die mit Aminen oder Säureanhydriden vernetzt werden. Epoxidharze können aufgrund der Herstellungsmethode geringe Mengen Epichlorhydrin enthalten, welches stark toxisch ist ($LD_{50}$ bei der Ratte oral : 50 mg/kg). Ferner kann der Umgang mit Epoxidverbindungen zu Sensibilisierung der damit arbeitenden Personnen führen. Ferner wird in Nature, London, 276; 391 (1978) die mutagene Wirkung aromatischer Epoxidharze im Ames-Test beschrieben.

Amine wirken stark schleimhautreizend, sind meist sehr geruchsintensiv und somit arbeishygienish problematish. Auch sie können sensibilisierend wirken. Die als Vernetzer ebenfalls verwendeten Säureanhydride, z.B. Pyromellithsäuredianhydrid, wirken ebenfalls sensibilisierend und stark schleimhautreizend.

Eine weitere Gruppe von Werkstoffen bilden die Polyacetale. So wird in der US-PS 3 200 099 eine Bindemittelkombination hydroxyfunktioneller Polymerer mit niedermolekularen Acetalen bzw. ketalen als Vernetzer beschrieben, der unmittelbar vor der Verarbeitung ein Säurekatalysator zugesetzt werden muß. Es handelt sich somit um Zweikomponentensysteme, die zudem durch die flüchtigen Acetalkomponenten zu arbeitshygienischen Problemen und Umweltverschmutzungsproblemen führen. In der DE-OS 33 39 424 wird eine wärmehärtbare Beschichtungsmasse mit einem Bindemittel aus (A) einer hydroxylgruppenhaltigen Verbindung und Umsetzungsprodukten aus Aldehyden mit Mono- und gegebenenfalls Polyalkoholen beschrieben, die diese Nachteile nicht aufweist. Nach der DE-OS 33 39 424 können Umsetzungsprodukte aus Aldehyden und Alkoholen mit der hydroxylgruppenhaltigen Komponente (A) gemischt oder soweit angesetzt werden, daß noch in organischen Lösungsmitteln lösliche polymere Verbindungen entstehen. Nach den Beispielen der DE-OS 33 39 424 werden Gemische von Tetramethoxypropan und Trimethoxyethan mit der hydroxylfunktionellen Komponente (A) zu Löslichen, wärmehärtbaren Einkomponenten-Bindemittelsystem umgesetzt.

Der vorliegenden Erfindung liegt die Aufgabe zugrunde, wärmehärtbare Beschichtungsmassen und darin enthaltene Bindemittel zu finden, die aus arbeitshygienischen Gründen weniger bedenklich sind als die im Stand der Technik beschriebenen, die außerdem einen höneren Festkörperanteil in der Beschichtungsmasse aufweisen können und zu überzügen führen, die in ihren Eigenschaften denjenigen überlegen sind, die mit den bekannten Beschichtungsmassen erhalten werden.

Überraschenderweise wurde gefunden, daß diese Aufgabe gelöst werden kann, Nenn als Komponenten für die Bindemittel eine bestimmte Auswahl von Umsetzungsprodukten von Aldehyden mit Alkoholen aus der Lehre der DE-OS 33 39 424 getroffen wird bzw. bestimmte neue Umsetzungsprodukte als Acetalvernetzerharze eingesetzt werden.

Gegenstand der Erfindug sind somit wärmehärtbare Beschichtungsmassen, enthaltend als Bindemittel (A)

filmbildende hydroxylgruppenhaltige Verbindungen mit einer Hydroxylfunktionalität von mindestens 2 und damit vermischt einen acetalfunktionellen Vernetzer (B). Die erfindungsgemäßen wärmehärtbaren Beschichtungsmassen sind dadurch gekennzeichnet, daß eine Hydroxylfunktionalität von mindestens 2 aufweisen und daß der acetalfunktionelle Vernetzer (B) ein nicht flüchtiges Acetalvernetzerharz ist, das erhältlich ist entweder durch Umsetzung eines Diacetals mit Acetalalkoxygruppen von 1 bis 4 Kohlenstoffatomen mit einem Dialkohol oder durch Umsetzung einer isocyanatterminierten Verbindung mit einem hydroxylfunktionellen Acetal.

Überraschenderweise hat es sich gezeigt, daß die erfindungsgemäßen Beschichtungsmassen, die aus dem hydroxyfunktionellen Bindemittel (A) und zusätzlich einem nicht flüchtigen Acetalvernetzerharz bestehen, im Vergleich mit denBeschichtungsmassen auf Polyacetalbasis der US-PS 3 200 099 und der DE-OS 33 39 424 zu überzügen mit überlegenen Eigenschäften führen und zudem einen hohen Festkörpergehalt in der Beschichtungsmasse ermöglichen.

Gegenstand der Erfindung ist weiterhin die Verwendung der oben definierten wärmehärtbaren Beschichtungsmasse und der darin eingesetzten Acetalvernetzerharze zur Herstellung von Lacküberzügen.

Als filmbildende hydroxylgruppenhaltige Verbindungen mit einer Hydroxylfunktionalität von mindestens 2 sind z.B, solche mit einem solchen mittleren Molekulargewicht von 100 bis 90000 geeignet: d.h. als komponente (A), werden gemäß der Erfindung bekannte derartige Verbindungen eingesetzt, wie sie auch zur Herstellung anderer bekannter Beschichtungsmassen verwendet werden. Bevorzugt weisen die hydroxylgruppenhaltigen Verbindungen (A) eine Hydroxylzahl von über 150, insbesondere über 250 auf.

Als hydroxylgruppenhaltige Verbindungen kommen neben den Polymerisatharzen wie Polyacrylatharzen auch Polykondensationsharze wie Polyester, Alkydharze, usw. und Polyadditionsharze wie Polyurethanharze in Betracht.

Als Polymerisatharze kommen im wesentlichen Polyacrylatharze mit einem Molekulargewicht bis zu etwa 90000 zur Anwendung, welche bereits in zahlreichen Patentschriften wie DE-A-15 95 243, DE-A-20 54 231, DE-A-20 21 178, DE-A-26 03 259 beschrieben sind. Es handelt sich hierbei um Polymerisate von Acrylmonomeren wie (Meth-)Acrylsäure, Methyl(meth)acrylat, Hydroxyethyl(meth)acrylat, Styrol, Vinylverbindungen, wie sie auch im Wagner/Sarx, Lackkunstharze, 5. Auflage, Viertes Kapitel, Seite 229-238 beschrieben sind.

Als Polykondensationsharze kommen z.B. Polyester- und Alkydharze in Betracht. Polyesterharze sind Umsetzungsprodukte von aliphatischen, cycloaliphatischen und/oder aromatischen Mono- und/oder Polycarbonsäuren mit aliphatischen und/oder cycloalphatischen Mono- und/oder Polyolen. Besonders bevorzugt sind Polyester bzw. Alkydharze mit einem Molekulargewicht von 500 bis 5000, welche als Carbonsäurekomponente Verbindungen wie Adipinsäure, Benzoesäure, p-tert.-Butylbenzoesäure, Maleinsäure, Fumarsäure, o-, m-, p-Phtalsäure, Sebacinsäure, Tetrahydro-, Hexahydro-Phthalsäure, Trimellithsäure sowie aliphatische gesättigte und/oder ungesättigte Monocarbonsäuren mit einer Kohlenstoffzahl von 6 bis 20 und als Alkoholkomponente Verbindungen wie Ethylenglykol, Propylenglykol, Glyzerin, Pentaerythrit, Neopentylglykol, Trimetylolpropan, Hexandiol, Hydroxypivalinsäureneopentylglykolester, Diethylenglykol, Dipropylenglykol enthalten. Solche Polyester bzw. Alkydharze sind z.B beschrieben in Houben-Weyl, Makromolekulare Stoffe II, Band 14/2, Seite 4-42 und in Ullman, "Encyclopädie der technischen Chemie", 4. Auflage, Band 19, Seite 61-86. Vorzugsweise kommen Polyester bzw. Alkydharze in Betracht, welche ein zahlenmittleres Molekulargewicht von 700 bis 4000 besitzen.

Als Polyadditionsharze, zweckmäßig mit einem Molekulargewicht von 500 bis 5000, werden solche verwendet, welche aus hydroxylgruppenhaltigen Polyethern, insbesondere Polypropylenglykolen, und/oder Polyolen mit di- und/oder trifunktionellen isocyanatharzen durch eine Polyadditionsreaktion hergestellt werden, wobei als H-active Substanz auch geringe Mengen von primären oder sekundären Aminen verwendet werden können und die entstehenden Reaktionsprodukte wiederum Hydroxylgruppen tragen. Besonders bevorzugt werden solche Polyadditionsharze verwendet, welche eine Hydroxylzahl von 150 bis 500 aufweisen.

Ferner können auch hydroxylgrupppenhaltige Polyester, zweckmäßige mit einem Molekulargewicht von 500 bis 5000, abgeleitet z. B. von Ethylenglykol, Propandiol-1,2, Butandiol-1,4 zur Herstellung der filmbildenden, vernetzenden, organischen Verbindungen verwendet werden.

Biespiele für Diacetale mit Acetalalkoxygruppen von 1 bis 4 Kohlenstoffatomen sind solche, deren Aldehydkomponente folgende Aldehyde zugrunde liegen: aliphatische gesättigte Dialdehyde mit 2 bis 15 Kohlenstoffatomen, sowie Dialdehyde mit einem oder mehreren aromatischen Ringen, wie beispielweise Glutardialdehyd und 4,4'-Diphenyletherdialdehyd.

Die Acetalalkoxygruppen der Acetale sind beispielsweise Methoxygruppen, Ethoxygruppen, n-Propoxygruppen, i-Propoxygruppen, n-Butoxygruppen, i-Butoxygruppen, sec.-Butoxygruppen, tert.-Butoxygruppen. Bevorzugt sind Methoxygruppen und Ethoxygruppen.

Im folgenden sind Beispeile für Acetalmonomere aufgeführt, die zur Herstellung der nicht flüchtigen Acetalvernetzerharze verwendet werden können.

1,1,3,3-Tetramethoxypropan

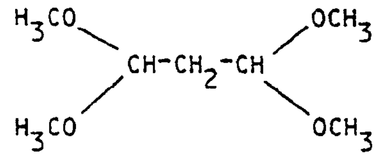

4,4'-Bis(dimethoxymethyl)diphenylether

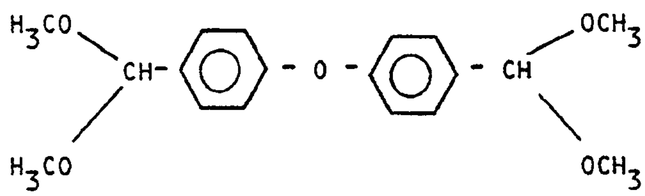

und die entsprechenden Diethoxyverbindungen.

Zur Bildung der in den erfindungsgemäß wärmehärtbaren Beschichtungsmassen eingesetzten nicht flüchtigen Acetalvernetzerharze werden die Diacetale mit Dialkoholen umgesetzt. Beispielsweise verwendet man Dialkohole, deren Hydroxylgruppen so voneinander getrennt sind, daß die Bildung cyclischer Acetale vermieden wird. Beispiele hierfür sind α, ω-Diole, in denen Hydroxylgruppen durch eine Längere Kohlenstoffkette oder Segmente eingeschränkter Beweglichkeit getrennt sind. Spezielle Beispiele sind diprimäre Alkohole wie Hexandiol-1,6, 1,4-Cyclohexandimethanol, dialkoxylierte Bisphenole z.B., diethoxyliertes Bisphenol A und Hydroxypivalinsäureneopentylglycolester.

Die erfindungsgemäß eingesetzten Acetalvernetzerharze weisen bevorzugt zahlenmittlere Molmassen von 400 bis 10000 auf. Die Bildung der Acetalvernetzerharze aus Diacetal und Dialdehyd erfolgt beispielsweise durch säurekatalysierte Kondensation des Diacetals, wie beispielsweise Tetramethoxypropan, mit bifunktionellen Alkoholen. Durch Variation der molaren Verhältnisse können niedrig- bis hochviskose Produkte erzielt werden. Die reaktion ist durch Messung der abgespaltenen Alkoholmenge (im Beispiel von Tetramethoxypropan ist der abgespaltene Alkohol Methanol) -gut kontrollierbar. Die Umsetzungstemperatur liegt bevorzugt bei 100 bis 150°C.

Ein Beispiel für den chemischen Aufbau dieser Acetalvernetzer ist im folgenden aufgeführt. Die Anzahl der wiederkehrenden Einheiten in diesem Beispiel wurde als 1 bis 5 angegeben, jedoch kann diese Anzahl, wie vorstehend erläutert, beliebig durch Einsatz entsprechender Molverhältnisse varriiert werden:

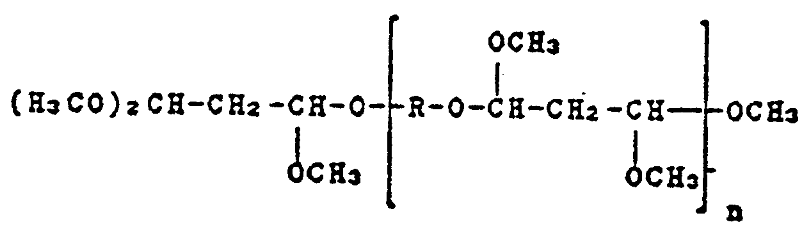

n=1-5

R = 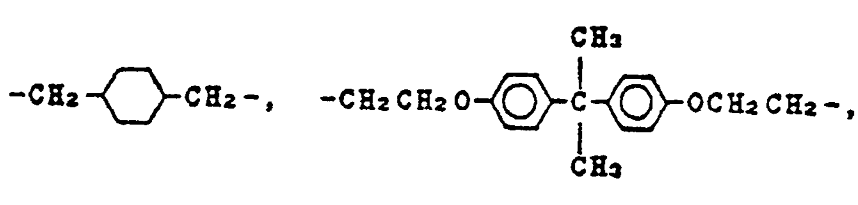

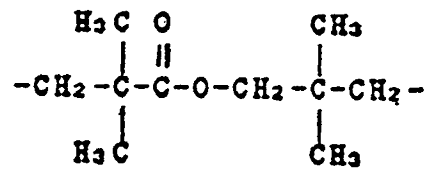

Diese beschriebenen Acetalvernetzer sind homokondensationsfähig. So erfolgt die Herstellung der Aceralvernetzer im allgemeinen unter Normalvruck. Schaltet man der Normaldruckkondensation eine Vakuumkondensation bei Temperaturen von beispielsweise 100 bis 200°C nach, so erfolgt eine Homokondensation. Durch intermolekulare Reaktion zwischen den Vernetzermolekülen wird das Molekulargewicht vergrößert. Als Spaltprodukt bildet sich das eingesetzte Acetal (in dem vorstehend erwähnten Beispiel das Tetramethoxypropan). Bei diesem kondensationsprozeß bilden sich nicht nur lineare sondern auch verzweigte und teilvernetzte Makromoleküle.

Gemäß einer anderen Ausführungsform der Erfindung werden die Acetalvernetzerharze bereitet durch Umsetzung einer Isocyanatterminierten Verbindung mit einem hydroxyfunktionellen Acetal. Als isocyanatterminierte Verbindungen kommen in Frage polyfunktionelle, d.h. mindestens bifunktionelle Isocyanate sowie beispielsweise isocyanatfunktionelle Prepolymere, wie sie nachstehend definiert werden.

Als isocyanatfunktionelle Prepolymere sind beispielsweise geegnet Umsetzungsprodukte aus mindestens bifunktionellen Alkoholen mit mindestens difunktionellen Isocyanaten in einem derartigen Verhältnis, daß isocyanatterminierte Prepolymere enstehen. Diese weisen eine Isocyanatfunktionalität von mindestens 2 auf. Je nach der gewünschten Molmasse und den gewünschten Viskositätseigenschaften des Acetalvernetzerharzes können zur Herstellung der isocyanat funktionnellen Prepolymeren bifunktionelle Alkohole bzw. bifunktionelle Isocyanate mit niedrigeren bis zu höheren Molekulargewichten eingesetzt werden. Beispiele für verwendbare Alkohole mit niedrigem Molekulargewicht sind aliphatische Diole bzw. Polyole insbes. handelsübliche 2- oder mehrwertige Alkohole mit 2 bis 6 Kohlenstofatomen. Es können jedoch auch Oligomere oder Polymere bzw. polykondensierte Alkohole verwendet werden, wie beispielsweise Polyesteralkohole, Polycaprolactonpolyole, Polyetheralkohole, deren Molekulargewicht sich nach den gewünschten Eigenschaften des herzustellenden Acetalvernetzerharzes richtet.

In gleicher Weise kann es sich bei den eingesetzten mindestens bifunktionellen Isocyanaten um niedermolekulare Produkte handeln. Beispiele sind aliphatische Diisocyanate wie sie im Handel üblich sind, wie das Hexamethylendiiosocyanat; cycloaliphatische Diisocyanate, wie 1,4-Diisocyanatocyclohexan, Isophorondiisocyanat. Höhermolekulare handelsübliche bi- und mehrfunktionelle Isocyanate, wie das Biuret des Hexamethylendiisocyanats (Handelsprodukt Desmodur N), das Isocyanurat des Hexamethylendiisocyanats (handelsprodukt Desmodur N 3300) und weitere handelsübliche Produkte. Hier richtet sich die Auswahl der mindestens bifunktionellen Isocyanatverbindung wie die Auswahl der mindestens bifunktionellen Alkohole nach den Molekulargewichts- bzw. Viskositätseigenschaften des gewünchten Aceltavernetzerharzes.

Die Umsetzung der mindestens bifunktionellen Alkohole mit den mindestens bifunktionellen Isocyanaten erfolgt in üblicher dem Fachmann geläufiger Weise unter Verwendung von stöchiometrischen Verhältnissen, die die Bildung von isocyanatterminierten Prepolymeren ermöglichen.

Die hydroxyfunktionellen Acetale, die zur Umsetzung mit den isocyanatfunktionellen Verbindungen verwendet werden sind mindestens monofunktionelle Acetale, deren Restmolekül mindestens eine hydroxylgruppe enthält. Biespiele für derartige monofunktionelle Acetale sind aliphatische Monoacetale mit mindestens 2 bis 15 Kohlenstoffatomen (in dem dem Acetal zugrunde liegende Aldehyd), wie beispielsweise 3,3-Dimethoxy-2,2-dimethylpropan-1-ol oder das Isomerengemish aus 4,4-Dimethoxybutan-1-ol und 3,3-Dimethoxy-2-methylpropan-1-ol; die Stellung der Hydroxylfunktion in dem Acetal ist nicht kritish. Bevorzugt werden jedoch primäre Hydroxylfunktionen.

Die Acetalalkoxyfunktionen der hydroxyfunktionellen Acetale entsprechen dener der vorstehend definierten Diacetale.

Zur Bildung der nicht flüchtigen Acetalvernetzerharze werden die isocyanatfunktionellen Verbindungen mit den hydroxylfunktionellen Acetalen bei Temperaturen von vorzugsweise 60 bis 100°C umgesetzt, bis ein Isocyanatwert von 0 erreicht wird. Die gebildeten Acetalvernetzerharze enthalten somit keine freien Isocyanatgruppen. Bevorzugt wird in derartigen stöchiometrischen Mengen gearbeitet, daß auch keine freien Hydroxylgruppen mehr vorliegen.

Die Molgewichte der so erzielten nicht flüchtigen Acetalvernetzerharze und damit auch deren Viskositätseigenschaften werden durch geeignete Wahl der Molgewichte der eingesetzten isocyanatfunktionellen Prepolymeren und hydroxyfunktionellen Acetale bestimmt. Die Molgewichte der Acetalvernetzerharze liegen

bevorzugt bei 400 bis 10000.

Vorstehend wurde vorwiegend die Ausführungsform beschrieben, bei der die nicht flüchtigen Acetalvernetzerharze aus isocyanatterminiertern Prepolymeren mit einem niedermolekularen hydroxyfunktionellen Acetal hergestellt wurden. Wie erwähnt, kann jedoch die isocyanatterminierte Verbindung auch ein mindestens bifunktionelles Isocyanat sein, das nicht mit einem mindestens bifunktionellen Alkohol zu einem Prepolymeren umgesetzt wurde. Als mindestens bifunktionelle Isocyanate eignen sich beispielsweise die Isocyanate, die vorstehend für die Herstellung der isocyanatfunktionellen Prepolymeren genannt wurden. Erfindungsgemaß kann somit ein derartiges mehrfunktionelles Isocyanat direkt mit einem nidermolekularen hydroxyfunktionellen Acetal zu dem nicht flüchtigen Acetalvernetzerharz umgesetzt werdn. Diese Ausführungsform ist insbesondere dann von Interesse, wenn möglichst niedrige Molekulargewichte der nicht flüchtigen Acetalvernetzerharze erzielt werden sollen.

Das Mengenverhältnis zwischen Komponente A und Komponente B in den erfindungsgemäßen Beschichtungsmassen wird bevorzugt so gewählt, daß auf ein Äquivalent Hydroxylgruppen mindestens 0,7 Äquivalente und höchstens 1,5 Äquivalente Acetalalkoxyendgruppen entfallen..

Besonders bevorzugt sind 0.8 bis 1.4 Äquivalente Acetalkoxyendgruppen pro Aquivalent Hydroxylgruppen der Komponente (A).

Als organische Lösemittel für die Bindemittel werden übliche Lacklösemittel, zweckmäßig aromatische Kohlenwasserstoffe wie Xylol, Solvesso 100 (eingetragenes Warenzeichen), Glykolester wie Methylpropylenglykolacetat, Alkohole wie Isopropanol, n-Butanol, Ether wie Ethylenglykoldimethylether oder andere organische Lösungmittel eingesetzt, welche die filmbildenden, vernetzenden, organischen Verbindungen zu lösen vermögen wobei auch Lösemittelgemische verwendet werden können.

Die Beschichtungsmasse gemäß der Erfindung enthält bevorzugt auf 100 Gew.-Teile Bindemittel etwa 10 bis 40 Gew.-Teile Lösemittel. Ein Vorteil der erfindungsgemäßen Beschichtungsmassen liegt, wie eingangs erwähnt, darin, daß sie einen relativ hohen Festkörpergehalt im Vergleich mit dem Stand der Technik aufweisen können.

Außerdem enthält die Beschichtungsmasse die üblichen Additive wie Siliconöle oder niedermolekulare Acrylpolymere (Verlaufsmittel), gegebenenfalls Pigmentbenetzungsmittel (z.B. Sojalecithin), Weichmacher z.B. Palatinol C (eingetragenes Warenzeichen), Epoxidharze, UV-Absorber, gegebenenfalls Füllstoffe z. B. Schwerspat, Kaolin, Talkum, gegebenenfalls Thixotropierungmittel wie Aerosil, Bentone (beide eingetragene Warenzeichen), und saure Katalysatoren wie p-Toluolsulfonsäure, Dodecylbenzolsufonsäure, Dinonylnaphtalindisulfonsäure und andere übliche saure Katalysatoren beispielsweise auf der Basis von Sulfonsäure.

Herstellung eines Alkydharzes als hydroxylgruppenhaltige Verbindung:

590 g Trimethylolpropan wurden mit 340 g Phthalsäureanhydrid, 169 g Adipinsäure und 111 g Isononansäure ein einem Vierhalskolben mit Kolonne, Abscheider, kühler, Rührer und Inertgasleitung vermengt. Etwa 50 g Xylol wurden als Schleppmittel zugegeben und zunächst wurde auf 150°C aufgeheizt. Anschließend wurde so Lange unter Erhöhung der Temperatur (bis 210°C) Wasser ausgekreist, bis die Säurezahl (SZ) des entstehenden Harzes unter 2 mgKOH/g gefallen war. Das entstandene Harz wurde abgekühlt und mit Methoxypropylacetat auf 60 % verdünnt.Errechnetes Molekulargewicht bei SZ 2 ist 1128,
Hydroxylfunktionalität 5,7.

Beispeile 1 bis 9 - Herstellung der Acetalvernetzerharze aus Dialkohol und Diacetal:

Die Diolkomponente wird mit p-Toluolsulfonsäure versetzt und in einem Rundkolben, der mit einer Brücke versehen ist, 30 Minuten auf 70°C erwärmt. Danach wird das Diacetal zugegeben und langsam bis zum Einsetzen der Reaktion erhitzt. Die Reaktionstemperatur liegt bei Einhaltung einer Kolonnenkopftemperatur von 65°C zwischen 100 und 150°C. Nachdem die theoretische Methanolmenge abgeschieden ist wird mit Triethylamin neutralisiert.

| | Beispiel 1 | Beispiel 2 | Beispiel 3 | Beispiel 4 | Beispiel 5 | Beispiel 6 | Beispiel 7 | Beispiel 8 | Beispiel 9 | Vergleich Tetrameth. |
|---|---|---|---|---|---|---|---|---|---|---|
| Hexandiol-1,6 | 26,419 | 32,374 | | | | | | | | |
| Hydroxipivalinsäureneopentylglykolester | | | | | | | 45,295 | 38,309 | 29,946 | |
| Diethoxiliertes Bisphenol A MG 316 | | | | 49,019 | 56,189 | | | | | |
| Cyclohexandimethanol | | | | | | 36,887 | | | | |
| Tetramethoxipropan | 73,437 | 67,492 | 64,867 | 50,880 | 43,743 | 63,015 | 54,620 | 61,596 | | |
| 4,4 Bis(dimethoximethyl)-diphenylether | | | | | | | | | 70,021 | |
| p-Toluolsulfonsäure | 0,067 | 0,062 | 0,059 | 0,046 | 0,031 | 0,045 | 0,039 | 0,044 | 0,015 | |
| Triethylamin | 0,077 | 0,072 | 0,070 | 0,055 | 0,037 | 0,053 | 0,046 | 0,051 | 0,018 | |
| Methoxigruppen / 100 g Harz | 1,57 | 1,33 | 1,22 | 1,03 | 0,80 | 1,23 | 1,04 | 1,28 | 0,65 | |
| Viskosität mPas / 25°C | 45 | 190 | 560 | 1533 | >50000 | 6030 | 1050 | 113 | >50000 | |
| FK 1 h 150°C % | 54 | 58 | 78 | 72 | 88 | 76 | 77 | 55 | 98 | 0 |

Beispiele 10 und 11

Die Polyolkomponente wird mit dem Isocyanat in einem Rundkolben, der mit einem Rückflußkühler versehen ist erwärmt. Die Reaktion erfolgt bei einer Temperatur von 95 -100°C. Nach vollständiger Umsetzung wird das Umsetzungsprodukt in Methoxipropylacetat gelöst. Anschließend wird das Acetal zugegeben und bei einer Temperatur von 80 - 85°C umgesetzt, bis eine NCO-Zahl von 0 erreicht ist.

| | Beispiel 10 | Beispiel 11 |
|---|---|---|
| Caprolactontriol MG 540 OH-Z 310 | 21,27 | 20,15 |
| Isophorondiisocyanat | 26,23 | 24,85 |
| 3,3-Dimethoxy-2,2-dimethylpropan-1-ol | 17,50 | |
| Isomerengemisch aus 4,4-Dimethoxybutan-1-ol und 3,3-Dimethoxy-2-methylpropan-1-ol | | 15,00 |
| Methoxypropylacetat | 35,00 | 40,00 |
| Methoxigruppen / 100 g Harz | 0,36 | 0,37 |
| FK 1 h 150°C % | 65 | 60 |
| Viskosität mPas 25°C | >50000 | 800 |

Vergleichsversuche

Im folgenden werden die erfindungsgemäßen Beschichtungsmassen mit Beschichtungsmassen verglichen, die gemäß der US-PS 3 200 099 nur ein monomeres Diacetal einsetzen. Die erfindungsgemäßen Bindemittel ermöglichen verbesserte Filmhärte und Lösungsbeständigkeit.

| | erfindungsgemäß | Stand der Technik |
|---|---|---|
| Polyesterharz OH-Zahl (60 %ig in Methoxipropylacetat) | 39,30 | 48,77 |
| Titandioxid | 35,30 | 35,30 |
| Bindemittel Beispiel 8 | 11,48 | -- |
| Tetramethoxipropan | -- | 6,04 |
| Additol SXL 462/45 | 0,30 | 0,30 |
| Silikonöl AR 200 (1 %ig in Xylol) | 0,20 | 0,20 |
| n-Butanol | 3,00 | 3,00 |
| p-Toluolsulfonsäure (20 %ig in n-Butanol) | 1,77 | 1,77 |

Einstellverdünnung: Butylglykolacetat
Auslaufviskosität AK 4-Becher 20°C 40 Sekunden

| Filmhärte Pendelhärte (König) bei 30 µm Trockenfilmdicke | erfindungsgemäß | Stand der Technik |
|---|---|---|
| Einbrennbedingung | | |
| 20 min / 120°C | 90 | 17 |
| 140°C | 158 | 31 |
| 160°C | 168 | 63 |
| 180°C | 168 | 72 |
| 200°C | 168 | 90 |

| Lösungsmittelbeständigkeit MEK-Beständigkeit Doppelhube bei 30 µm Trockenfilmdicke | erfindungs-gemäß | Stand der Technik |
|---|---|---|
| Einbrennbedingungen | | |
| 20 min / 120°C | <10 | 1 |
| 140°C | 30 | 1 |
| 160°C | 60 | 1 |
| 180°C | 60 | 1 |
| 200°C | 80 | 1 |

## Patentansprüche

### Patentansprüche für folgende Vertragsstaaten: BE, CH, DE, FR, GB, IT, LI, NL, SE

1. Wärmehärtbare Beschichtungsmasse, enthaltend als Bindemittel (A) filmbildende hydroxylgruppenhaltige Verbindüngen mit einer Hydroxylfunktionalität von mindestens 2 und damit vermischt einen acetalfunktionellen Vernetzer (B), **dadurch gekennzeichnet**, daß der acetalfunktionelle Vernetzer (B) ein nicht flüchtiges Acetalvernetzerharz ist, erhältlich entweder durch Umsetzung eines Diacetals mit Acetalalkoxygruppen von 1 bis 4 Kohlenstoffatomen mit einem Dialkohol oder durch Umsetzung einer isocyanatterminierten Verbindung mit einem hydroxylfunktionellen Acetal.

2. Wärmehärtbare Beschichtungsmasse nach Anspruch 1, dadurch gekennzeichnet, daß die Hydroxylgruppen des zur Erzielung des Acetalvernetzerharzes verwendeten Dialkohols so voneinander getrennt sind, daß die Bildung zyklischer Acetale vermieden wird.

3. Wärmehärtbare Beschichtungsmasse nach Anspruch 1, dadurch gekennzeichnet, daß als Dialkohole zur Erzielung des Acetalvernetzerharzes α, ω-Diole eingesetzt werden, in denen die Hydroxylgruppen dur eine Längere Kohlenstoffkette oder Segmente eingeschränter Beweglichkeit getrennt sind.

4. Verwendung der wärmehärtbaren Beschichtungsmasse nach einem der Ansprüche 1-3 zur Herstellung von Lacküberzügen.

5. Verwendung der gemäß Anspruch 1 eingesetzten nicht flüchtigen Acetalvernetzerharze zur Herstellung Lacküberzügen.

### Patentansprüche für folgenden Vertragsstaaten: AT, ES

1. Verfahren zur Herstellung einer wärmehärtbaren Beschichtungsmasse, **dadurch gekennzeichnet**, daß man ein Diacetal mit Acetalalkoxygruppen von 1 bis 4 Kohlenstoffatomen mit einem Dialkohol oder eine isocyanatterminierte Verbindung mit einem hydroxylfunktionellen Acetal zu einem nicht flüchtigen Acetalvernetzerharz als acetalfunktionellem Vernetzer (B) umsetzt und diesen mit einem Bindemittel (A) aus filmbildenden hydroxylgruppenhaltigen Verbindungen mit einer Hydroxylfunktionalität von mindestens 2 vermischt.

2. Verfahren nach Anspruch 1, dadurch gekennzeichnet, daß man eine Beschichtungsmasse herstellt, in der die Hydroxylgruppen des zur Erzielung des Acetalvernetzerharzes verwendeten Dialkohols so voneinander getrennt sind, daß die Bildung zyklischer Acetale vermieden wird.

3. Verfahren nach Anspruch 1, dadurch gekennzeichnet, daß als Dialkohole zur Erzielung des Acetalvernetzerharzes α,ω-Diole eingesetzt werden, in denen die Hydroxylgruppen durch eine längere Kohlenstoffkette oder Segmente eingeschränkter Beweglichkeit getrennt sind.

## Claims

### Claims for the following Contracting States: BE, CH, DE, FR, GB, IT, LI, NL, SE

1. A thermosetting coating composition containing as binder (A) film-forming hydroxyl-group-containing compounds with a hydroxyl functionality of at least 2 and, mixed therewith, an acetal-functional crosslinker (B), characterized in that the acetal-functional crosslinker (B) is an involatile acetal crosslinker resin, obtainable either by reaction of a diacetal with acetalalkoxy groups of 1 to 4 carbon atoms with a dialcohol or by reaction of an isocyanate-terminated compound with a hydroxylfunctional acetal.

2. A thermosetting coating composition according to Claim 1, characterized in that the hydroxyl groups of the dialcohol used to obtain the acetal crosslinker resin are so separated from each other that the formation of cyclic acetals is avoided.

3. A thermosetting coating composition according to Claim 1, characterized in that α, ω-diols in which the hydroxyl groups are separated by a fairly long carbon chain or segments of restricted mobility are used as dialcohols to obtain the acetal crosslinker resin.

4. The use of the thermosetting coating composition according to one of Claims 1-3 for the production of lacquer coatings.

5. The use of the involatile acetal crosslinker resins used according to Claim 1 for the production of lacquer coatings.

### Claims for the following Contracting States: AT, ES

1. A process for the production of a thermosetting coating composition, characterized in that a diacetal with acetalalkoxy groups of 1 to 4 carbon atoms is reacted with a dialcohol or an isocyanate-terminated compound is reacted with a hydroxy-functional acetal to an involatile acetal crosslinker resin as an acetal-functional crosslinker (B) and the latter is mixed with a binder (A) of film-forming hydroxyl-group-containing compounds with a hydroxyl functionality of at least 2.

2. A process according to Claim 1, characterized in that a coating composition is produced in which the hydroxyl groups of the dialcohol used to obtain the acetal crosslinker resin are so separated from each other that the formation of cyclic acetals is avoided.

3. A process according to Claim 1, characterized in that α, ω -diols in which the hydroxyl groups are separated by a fairly long carbon chain or segments of restricted mobility are used as dialcohols to obtain the acetal crosslinker resin.

## Revendications

### Revendications pour les Etats contractants suivants: BE, CH, DE, FR, GB, IT, LI, NL, SE

1. Revêtement thermodurcissable contenant comme liant (A) des composés filmogènes comportant des groupes hydroxyles ayant une fonctionnalité hydroxyle d'au moins 2 et mélangé avec un réticulant (B) présentant des fonctions acétals, caractérisé en ce que le réticulant (B) présentant des fonctions acétals est une résine réticulée acétal non volatile, obtenue soit par réaction d'un diacétal présentant des groupes acétalalcoxy ayant 1 à 4 atomes de carbone avec un dialcool ou par réaction d'un composé se terminant par des isocyanates avec un acétal présentant des fonctions hydroxyles.

2. Revêtement thermodurcissable selon la revendication 1, caractérisé en ce que les groupes hydroxyles du dialcool utilisé pour obtenir la résine réticulée acétal sont séparés entre eux, de telle façon que soit évitée la formation d'acétals cycliques.

3. Revêtement thermodurcissable selon la revendication 1, caractérisé en ce que l'on utilise comme dialcools pour obtenir la résine réticulée acétal des α, ω diols, les groupes hydroxyles étant séparés par une chaîne carbonée allongée ou par des segments de mobilité limitée.

4. Utilisation du revêtement thermodurcissable selon l'une des revendications 1 à 3, pour la préparation de couches de vernis.

5. Utilisation des résines réticulées acétal non volatiles selon la revendication 1 pour la préparation de couches de vernis.

**Revendications pour les Etats contractants suivants: AT, ES**

1. Procédé pour la préparation d'un revêtement thermodurcissable, caractérisé en ce que l'on fait réagir un diacétal présentant des groupes acétalalcoxy ayant 1 à 4 atomes de carbone avec un dialcool ou un composé se terminant par des isocyanates avec un acétal ayant des fonctions hydroxyles pour former une résine réticulée acétal non volatile comme réticulant (B) ayant des fonctions acétals et en ce que l'on mélange celui-ci avec un liant (A) constitué de composés filmogènes contenant des groupes hydroxyles ayant une fonctionnalité hydroxyle d'au moins 2.

2. Procédé selon la revendication 2, caractérisé en ce que, pour la préparation du revêtement, le dialcool utilisé pour obtenir la résine réticulée acétal présente des groupes hydroxyles séparés entre eux, de telle façon que soit évitée la formation d'acétals cycliques.

3. Procédé selon la revendication 1, caractérisé en ce que l'on utilise comme dialcools pour obtenir la résine réticulée acétal des α ,ω diols, les groupes hydroxyles étant séparés par une chaîne carbonée allongée ou par des segments de mobilité limitée.